# EUROPEAN PATENT APPLICATION

(11) **EP 2 839 875 A1**
(43) Date of publication of application: **25.02.2015**
(21) Application number: 13180934.5
(22) Date of filing: 19.08.2013
(51) Int. Cl.: B01J 8/42, B01J 19/08, B01J 19/12, B01J 19/24, B01J 8/02, C11C 3/00

(54) **Magnet enhancement of chemical processes and magnetic field implementation for liquid quality enhancement**

(71) Applicant: Alnico Technologies Limited, Limerick (IE)
(72) Inventor: Heighway, James, 61145 Kharkov (UA); Boiko, Viktor, 02222 Kiev (UA)
(74) Representative: Catesby, Olivia Joanne

(57) **Abstract**

A method and system for enhancing a chemical process comprising providing a plurality of magneto-strictive agents in a reaction chamber having an external electromagnetic coil winding; introducing fluid reactants into the chamber; and applying a discontinuous time variable signal to the coil winding to generate a time varying magnetic field with high field gradients within the chamber to enhance the chemical processing of the fluid reactants, and a system for enhancing fluid quality comprising a conduit for a fluid; at least one permanent magnet arranged in the conduit; a flow path defined within the conduit around the at least one permanent magnet, the flow path being non-linear, and means for pumping fluid through the conduit in a pulsed manner.

## Description

### Field of the Invention

The present invention relates to the enhancement of chemical processes and liquid/fluid quality, in particular through use of magnetic fields.

### Background to the Invention

In 1976, D D LOGVINENKO and O P SHELYAKOV, based in Kiev, Ukraine published a book entitled "Intensification of Technological Processes in Machines with Velocity Layers" (in Russian) which detailed work on rotating electromagnetic fields for use in the enhancement of the mixing of various materials and the production of paints, plastics etc. Their work was patented in the US under US-A-3969129. They had built an efficient and effective stirrer.

Logvinenko removed the rotor from the motor/generator and replaced it with a reaction chamber then applied time varying electro-magnetic fields by using the standard electric windings to generate rotating fields which drove magnetically active cylinders within the reaction chamber in a rotational manner. The fields generated were between 0.1 and 0.15 Tesla. The cylinders, magnetically active "needles", were physically driven around the inner chamber thereby stirring and mixing the constituents. His work involved stirring for many minutes and hours as required. The rotation was required to be smooth and continuous. The apparatus was specifically designed to ensure that the "needles" physically rotated at 50 Hz; this was the applied frequency which was maintained for as long as necessary to complete the stirring and to precipitate the residues. Magnetically activated stirrers are today standard equipment in chemical laboratories.

One process which could benefit from magnet enhancement is trans-esterification. The process of trans-esterification was developed in the mid 19^{th} Century and consists of taking a vegetable oil and Methanol and reacting them in the presence of a catalyst; normally Potassium of Sodium Hydroxide. The principal reaction products are a mixture of Fatty Acid Methyl Esters (FAME), the Biodiesel itself, and Glycerol. This is a commercial process wherein the reaction strips the fatty acids (mono-, di- and triglycerides) from the glycerol backbone of the vegetable oil molecules using Potassium or Sodium Hydroxide (or Sulphuric Acid in some instances) and attaches methanol molecules to them It is well-known that the trans-esterification process needs to be driven and a number of methods have been adopted to effect this; add excess Methanol, increase the temperature and pressure, apply microwave radiation, use cavitation etc. These processes are not efficient, the reaction time is substantial (hours), the power consumption is high and the engineering requirements are both challenging and expensive. A further problem with prior art processes is the required use of several equivalents of Methanol. In addition, the purity levels obtained when the current state-of-the-art methods are employed are often insufficiently high to meet the European standard for Biodiesel.

### Summary of the Invention

In accordance with the present invention there is provided a method of enhancing a chemical process comprising:
providing a plurality of magneto-strictive agents in a reaction chamber having an external electromagnetic coil winding;
introducing fluid reactants into the chamber; and
applying a discontinuous time variable signal to the coil winding to generate a time varying magnetic field with high field gradients within the chamber to enhance the chemical processing of the fluid reactants.

The discontinuous time variable signal applied to the coil winding may be chopped. Preferably, the discontinuous time variable signal applied to the coil winding is frequency variable. The chemical process may be trans-esterification and the fluid reactants may comprise methanol and oil. The chemical process may be esterification.

The present invention further provides a system for enhancing a chemical process comprising:
at least one reaction chamber for fluid reactants, the at least one reaction chamber having an external electromagnetic coil winding;
a plurality of magneto-strictive agents within the at least one reaction chamber; and
means for applying a discontinuous time variable signal to the coil winding to generate a time varying magnetic field with high field gradients within the chamber to enhance the chemical processing of fluid reactants contained therein.

Three reaction chambers may be provided in series, wherein at least one of the reaction chambers may be connected in reverse, relative its adjacent reaction chambers. The magneto-strictive agents may be needles. A field enhancing mesh may be provided in the system.

The present invention further provides a system for enhancing the quality of a fluid comprising:
a conduit for a fluid;
at least one permanent magnet arranged in the conduit;
a flow path defined within the conduit around the at least one permanent magnet, the flow path being non-linear, and
means for pumping fluid through the conduit in a pulsed manner.

The term non-linear is intended to indicate that the path is not straight, it bends/comprises changes in direction. In one embodiment it may be tortuous or have a labyrynth form. The system may comprise means for varying at least one of pump pressure, flow velocity, or pulse rate. The conduit may be defined within a non-magnetic chamber. The chamber may be substantially cylindrical. A distribution of magnetic elements may be provided in the form of a cylindrical insert. The cylindrical insert may comprise multiple segments. Means may be provided for varying the field strength from -1.3 Tesla to +1.3 Tesla in each segment. Preferably the flow path follows a labyrinth-type path.

The present invention further provides a method for enhancing the quality of a fluid comprising:
arranging a non-linear flow path around at least one permanent magnet in a conduit; and
pumping fluid through the conduit in a pulsed manner.

The method may further comprise varying at least one of pump pressure, fluid flow velocity, or pulse rate.

There is further provided a reaction core for use in a system for enhancing fluid quality, the reaction core comprising:
a conduit for a fluid;
at least one permanent magnet arranged in the conduit;
a flow path defined within the conduit around the at least one permanent magnet, the flow path being non-linear.

The conduit may be defined within a non-magnetic chamber. The chamber may be substantially cylindrical in some embodiments. A distribution of magnetic elements may be provided in the form of a cylindrical insert. The cylindrical insert may comprise multiple segments. Preferably the flow path follows a labyrinth-type path.

The present invention involves the application of time varying, differential magnetic fields to fluids/liquids, achieved in one aspect of the invention through the use of specially modified motor/generator windings powered from custom designed power supplies.

Through use of the present invention, it is possible to generate at a fixed location a strongly time varying magnetic field with high field gradients and with random time variations. Novel magnet windings and a highly complex power supply form part of the system of the first aspect of the present invention, which supplies the required time variations via carefully chosen timing sequences, frequencies and amplitudes for the applied electrical power. The result was that if one measured the magnetic field at a fixed location then the field recorded would have a randomly, rapidly changing amplitude with a high field gradient.

So whereas prior art systems demand rotation when using magnetic fields, the present invention is adapted to minimise rotation and maximise the discontinuities and asynchronous nature of the applied field.

It is an object of the invention to
- Align magnetic and geometrical axes of the "needles"
- Maximize the magneto-strictive effect
- Establish optimum dimensions for the "needles"
- Maximize the magnetic field and magnetic field gradient by determining ideal chamber diameter /"needle" ratio
- Determine optimum winding configuration
- Optimize applied frequency and harmonic content
- Establish best series/parallel configuration of modules

The present invention has a further application in the area of fluid/liquid quality enhancement. In a second aspect of the invention, there is provided a completely passive method of producing high strength, strongly time varying magnetic fields, with extreme field gradients. This aspect of the invention may be applied to the treatment/improvement of alcoholic based liquids where the water content of the spirit is modified by the applied magnetic field. The result is an enhancement of the quality and purity of the spirit. In addition the technique may be applied in the area of viticulture to implement a rapid ageing of the wine prior to bottling.

### Brief Description of the Drawings

Embodiments of the invention will be described, by way of example only, with reference to the accompanying drawings in which:
Figure 1 shows a reactor schematic according to one aspect of the invention.
Figure 2 shows a winding detail in accordance with one aspect of the invention for one section of the reactor module in the reactor schematic of Figure 1.
Figure 3 shows cross-sectional views of a reaction chamber in accordance with a further embodiment of the invention
Figure 4 shows a reaction cylinder in accordance with a further aspect of the present invention.
Figure 5 shows an embodiment of reaction chamber in accordance with one embodiment of the invention.
Figure 6 shows examples of permanent magnet structures for use in the present invention.
Figure 7 shows one possible arrangement of a flow path around a pair of horseshoe magnets.
Figure 8 shows an alternative embodiment of reaction chamber in accordance with the present invention.
Figure 9 shows a reaction chamber in accordance with a further embodiment of the invention.

### Detailed Description of the Drawings

The present invention relates to the use of non-linear, rapidly changing, and time-varying magnetic fields, which are strongly discontinuous, to enhance the speed of chemical processes, for example, trans-esterification. Taking trans-esterification as an example, the process when applied to the production of biodiesel, requires the use of one equivalent of methanol (with low water content), potassium hydroxide and waste vegetable oil (or rapeseed oil), to produce methyl esters. The process is carried out at room temperature (∼31 °C) and is complete in a matter of seconds. To date a wide variety of magnetic "needles" have proven effective in the reaction device. In general, double-ended nails tend to be used.

Key to the success of the reaction is the type of magnetic field that is generated. The magnetic field is highly non-linear, rich in harmonics and of a random/chaotic nature. (This type of field is eliminated/minimized in a standard motor, as if a rotor was present, the chaotic nature of the field would destroy the device.) However, the magnetic energy, which results from placing the needle tips in the chaotic magnetic field, is converted into kinetic energy, and the resulting shock waves lead to cavitation and hot-spot pockets within the reaction chamber. (Microwave heating and ultrasound are widely used, to enhance reaction processes by a similar means). An approximate 2 °C rise in the average temperature of the bulk material is observed over the course of the reaction.

In order to obtain high conversion rates, (from lipid to ester), the field configuration is vital. This can be achieved by winding coils so that non-linear oscillatory and pulsed components as well as strong rotating fields can be generated. The windings described herein are effective at enhancing the trans-esterification of rapeseed oil to produce biodiesel of at least European Standard EN14214 quality. This is a marked improvement on the current state of the art, which requires the use of several equivalents of Methanol, and prolonged reaction times. In addition, the purity levels obtained when the current state-of-the-art methods are employed are often insufficiently high to meet the European standard. Another distinct advantage of using a single equivalent of methanol is that it precludes the requirement for methanol recycling once the reaction is complete.

It has been discovered that using non-linear, rapidly changing, time varying magnetic fields which are strongly discontinuous can enhance the speed of the trans-esterification process and direct it to completion much faster. The conversion is effected in seconds at room temperature and normal pressures. In addition, the excess Methanol is not necessary and the output is free of excess water. The process enhancement is effected through the use of trapped magneto-strictive agents within the reaction chamber. These agents focus the highly non-linear magnetic fields at a microscopic and molecular level. The magnetic energy is converted into kinetic energy by the "needle" tips and the resulting shock wave enhances the chemical process. The applied electrical energy is converted through the stator into an internal magnetic field. This magnetic field is highly non-linear, rich in harmonics and of a random/chaotic nature. The "needles" may be iron based but other materials such as nickel, cobalt, some lanthanides (terbium or dysprosium) as well as mixed materials could be used.

The field configuration that is required can be achieved by winding coils so that non-linear oscillatory and pulsed components as well as rotating can be generated. In conventional motors/generators, six race-track coils are used (1 pair for each of the applied phases) and are driven synchronously so as to produce a steady 50Hz rotating magnetic field. In the system of the present invention, the coils are wound in an alternative manner and are driven asynchronously and as such act so as to produce a chaotic action within the reaction chamber and cavitation at the needle points as well as local resonances at kHz type frequencies. A rotating component of field is virtually unavoidable however the coils are wound, but it is not the rotation of the "needles" that produces the molecular breakdown. There is simply not enough time as batch tests have shown that in the current configuration more than 99% conversion is effected within 10 seconds from start-up. It is the random, resonant vibrating component generating a travelling shock wave transmitted throughout the chamber at the velocity of sound that causes the desired effects.

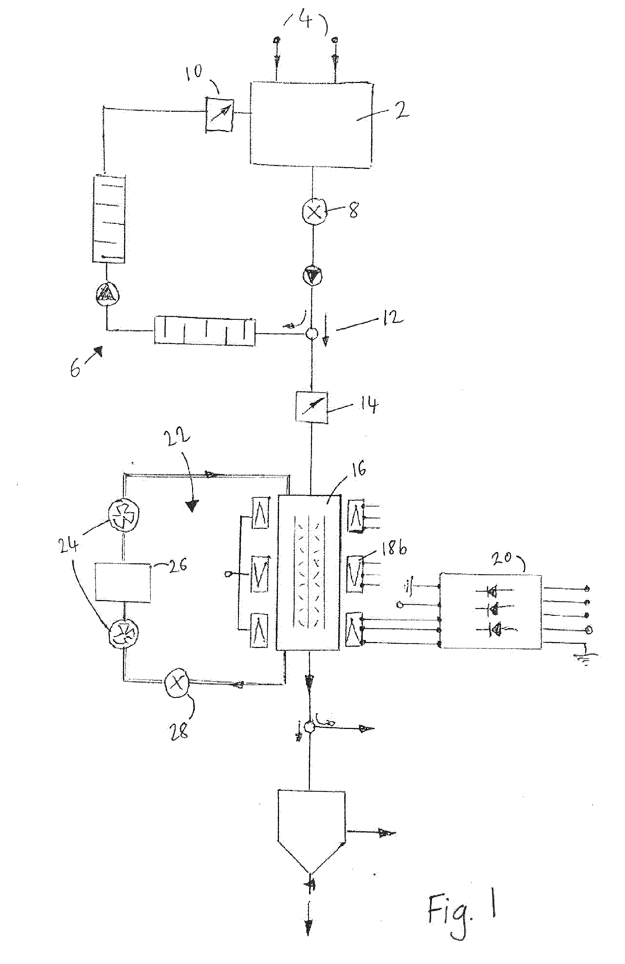

One embodiment of a reactor system incorporating the present invention is shown schematically in Figure 1 and contains a store/mixer tank 2 having two inputs 4, one for Methanol/KOH and one for Oil. A Venturi/Labyrinth re-circulating system 6 is provided further comprising a pump 8, flow meter 10 and control valve 12. A second flow meter 14 is provided in-line to reactor 16. The reactor comprises a three-stage reactor chamber, comprising a reaction vessel 17 with three coil winding sections 18. The central coil winding section 18b is reversed. A custom-built power supply 20 is provided with high harmonic, non-linear and pulsed content. A cooling system 22 for coil temperature control incorporating a plurality of radiators 24, a store 26 and a pump 28 is also provided. The output of the system is Biodiesel and glycerol.

In the embodiment shown in Figure 1, the reaction vessel comprises a cylinder with a non-magnetic stainless steel insert. The insert creates three active zones in the reaction chamber. The active zone in each chamber is separated to enhance the acoustic resonance conditions. In the present example, the reaction chamber is 100mm in diameter and 220 mm in length. The "needles" are 1mm diameter by 15 mm in length with sharp pointed ends and typically 100 gms are present in each chamber. It will be appreciated that any sized reaction chamber and any sized needles may be used with the present invention. The reaction chamber may be manufactured from any non-magnetic material including plastic.

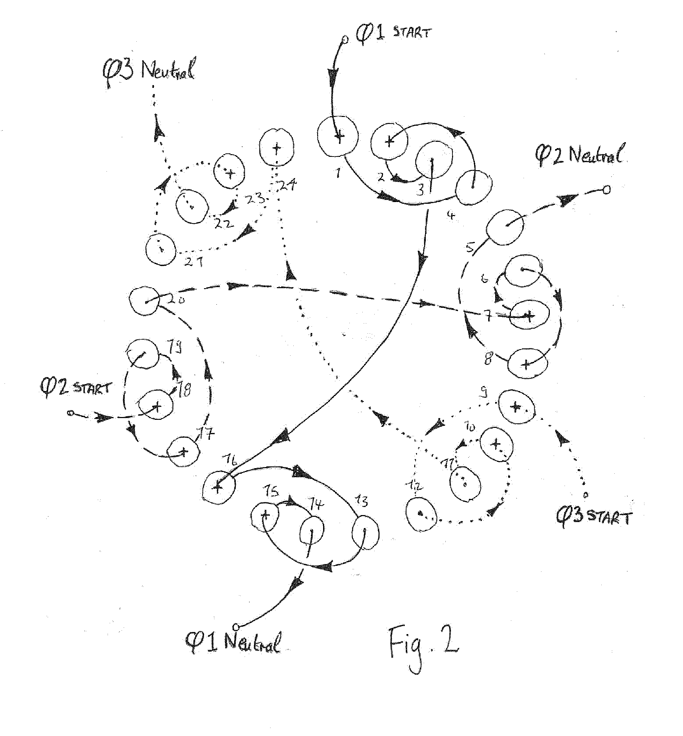

Figure 2 shows an example winding detail of a single section of the reactor module, the winding having a 24 slot - 2 pole - 3 phase form.

Each set of coils, whether in a conventional race-track configuration or concentric are driven electrically with different phase shifts, frequencies and amplitudes and not in a synchronous manner. The reaction chamber is surrounded with a conventional stator comprising a plurality of annular discs of high permeability. Each disc typically has 24 "slots" around its inner periphery through which the coils are wound. A number of variants of windings are possible, for example:

| | |
|---|---|
| Example 1: | Phase 1 (1, 4, 2, 3) : (16, 13, 15, 14) |
| | Phase 2 (18, 19, 17,20): (7, 6, 8, 5) |
| | Phase 3 (9, 12, 10, 11) : (24, 21, 23, 22) |
| | |
| Example 2: | Phase 1 (1, 2, 23, 24) : (11, 12, 13, 14) |
| | Phase 2 (17, 18, 15, 16) : (4, 3, 5, 6) |
| | Phase 3 (9, 10, 7, 8) : (19, 20, 21, 23) |
| | |
| Example 3: | Phase 1 (1, 8, 2, 7) : (13, 20, 14, 19) |
| | Phase 2 (17, 24, 18, 23) : (5, 12, 6, 11) |
| | Phase 3 (9, 16, 10, 15) : (21, 4, 22, 3) |

### Example 1 is demonstrated in Figure 2.

The above represent only an example of the variants of windings which may be utilized to generate the required magnetic fields. The windings and the reaction chamber may vary in type and in size depending on the material and the throughput required.

The magnetic fields that can be generated using race-track type windings are typically in the range 0.1 to 0.15 Tesla. The flow rate is set so as to optimize the conversion efficiency for the material being processed; in the case of refined sunflower oil/Methanol mix this has been experimentally determined to be approximately 10 seconds.

Although the present invention has been described herein with reference to biodiesel manufacturing, it will be appreciated that the present invention is applicable to any chemical processes. Further examples of application include the flavourings industry and/or pharmaceutical industry where esterification reactions are commonplace.

By applying non-linear, pulsed and oscillatory magnetic fields to the standard trans-esterification process and using magnetically active focusing "needles" the energy of the external electrical supply can be concentrated at the molecular level in an instantaneous manner - not a stirring/mixing process. Intense field gradients produce local hotspots and high pressure regions, that act at a microscopic level to modify the molecular structure with 99% conversion within less than 10 seconds.

The present invention generates a strongly time varying magnetic field with high field gradients and with random time variations at a fixed location within a liquid. Such a field distribution can be achieved by building a highly variable magnetic field distribution and then physically moving this construction in a chaotic manner within the fluid, however this is not an easy construction to implement. However, it was realized that if the field amplitudes and the field gradients were held stationary and the fluid moved past the point of contact in a random manner, then the same effect/result would be achieved.

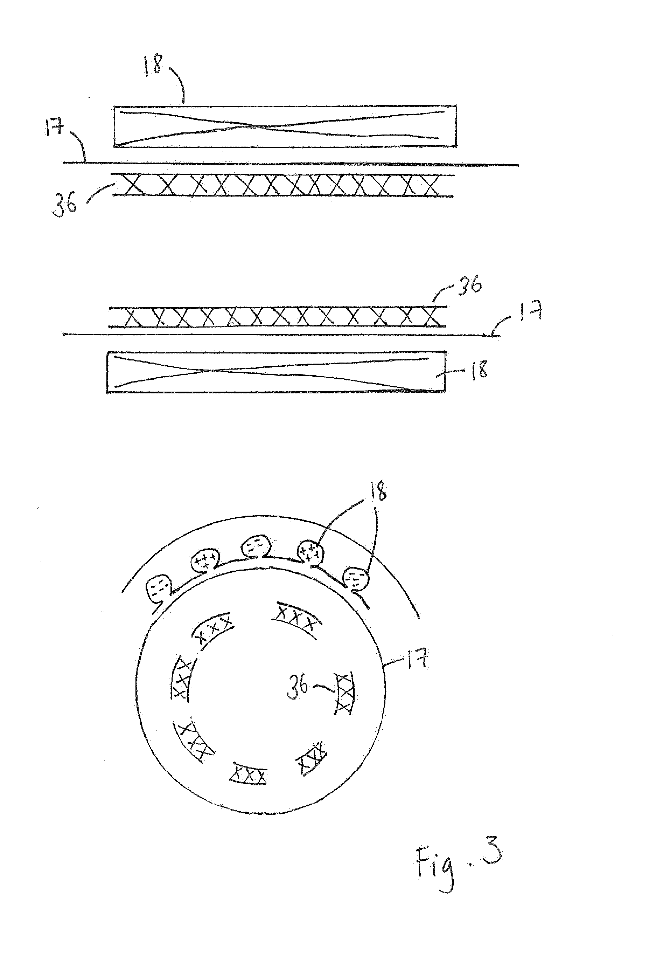

Figure 3 shows cross-sectional views of a reaction chamber in accordance with one embodiment of the invention. Electrical windings 18 surround the reaction vessel 17. Within the vessel is a "transparent" catalyst membrane support structure 36.

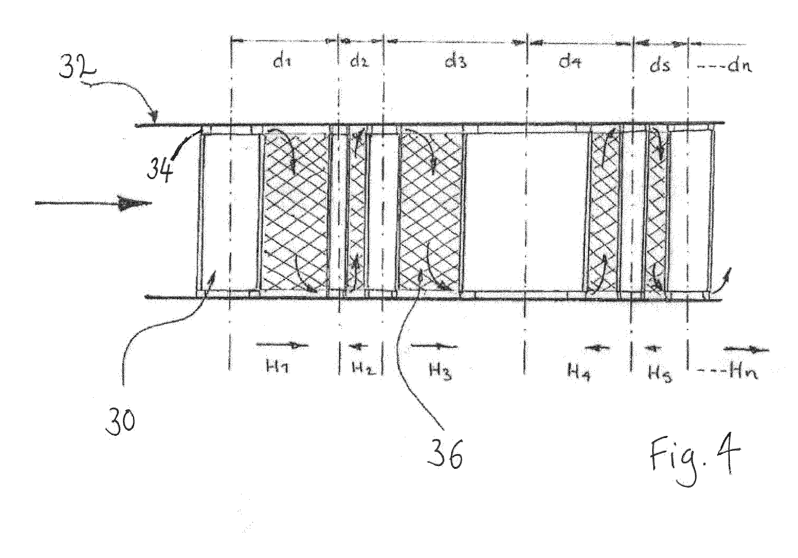

Figure 4 shows a further embodiment of the present invention, wherein a machined cylindrical non-magnetic stainless steel chamber 32 is used to contain the reaction. In alternative embodiments, the chamber may take an alternative form. Within this outer cylinder 32 is located a precisely engineered distribution of magnetic elements 30 in the form of a cylindrical insert. The insert comprises a number, m, of permanent (typically Neodymium/Iron/Boron) magnets 30. These are formed, pressed and sintered to shape and energized to the exact field strength required for the function. The magnets, each with its specific field intensity, Hₘ are assembled into a segmented cylindrical array and spaced according to the centre to centre distances, dₘ specified in the layout documentation. Fluid is pumped around and through the insert in a pulsed and random manner. Spacer elements 34 are provided in this embodiment to create a flow path between the chamber wall and the magnets to allow the fluid to flow around the magnets. A field enhancing mesh 36 may be provided within the chamber to increase the effects of the magnetic elements. Neither of these features are essential to the invention. The effects are not solely associated with the amplitude of the magnetic fields but are most significantly dependent on the distribution of the fields and the rate of change of the field in time and space. The interstices of the structure can be in structural integrity to the insert and to enhance the field strength whilst allowing the fluid to pass. The flow is constrained in a non-linear/tortuous/labyrinth type path by appropriate engineering and the flow rate is determined by the applied pressure which sets the transfer velocity and thus the transit time. Thus the time variance of the chamber is precisely determined and controlled.

Each insert therefore contains a precisely defined number of segments, each of which has been carefully and specifically designed. The field strength can be varied from -1.3 Tesla to +1.3 Tesla in each segment depending on the magnetic material used, the size and volume of the segment, as well as its orientation. Multiple inserts may be operated in series as desired.

The only powered item in this embodiment of the invention is the necessary pump and the only extra requirement is to make the flow pulsed, oscillatory and random in time and pressure. In this way the fluid is subjected to randomly changing magnetic fields with extreme field gradients as the pump pressure/flow velocity/pulse rate is varied. The immense advantage of this assembly lies not just in the fact that it has absolutely no moving parts and just uses one pump but in addition, because of the availability of very high strength permanent magnets, a very strong high magnetic field variation can be achieved.

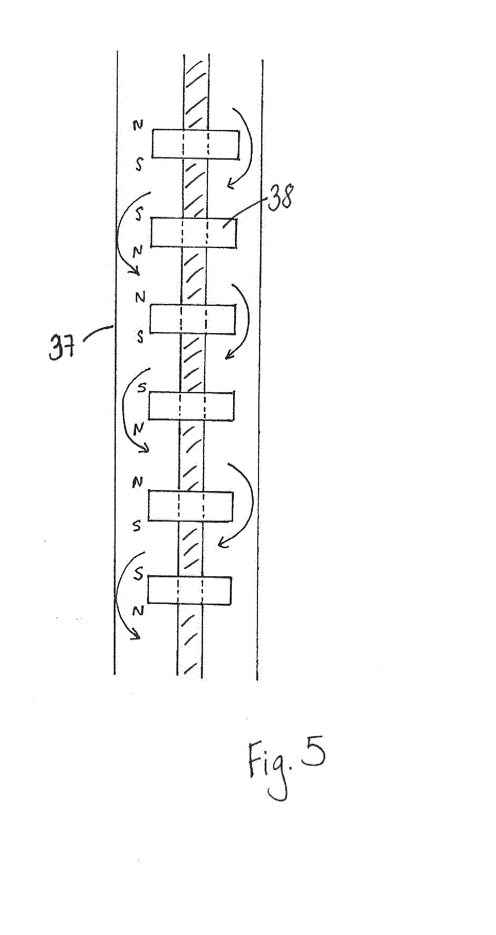

Figure 5 shows an embodiment of reaction chamber in accordance with a further embodiment of the invention. The chamber 37 contains a plurality of annular permanent magnets 38 arranged in series to provide a non-linear labyrinth-type path for the fluid being pumped through the chamber.

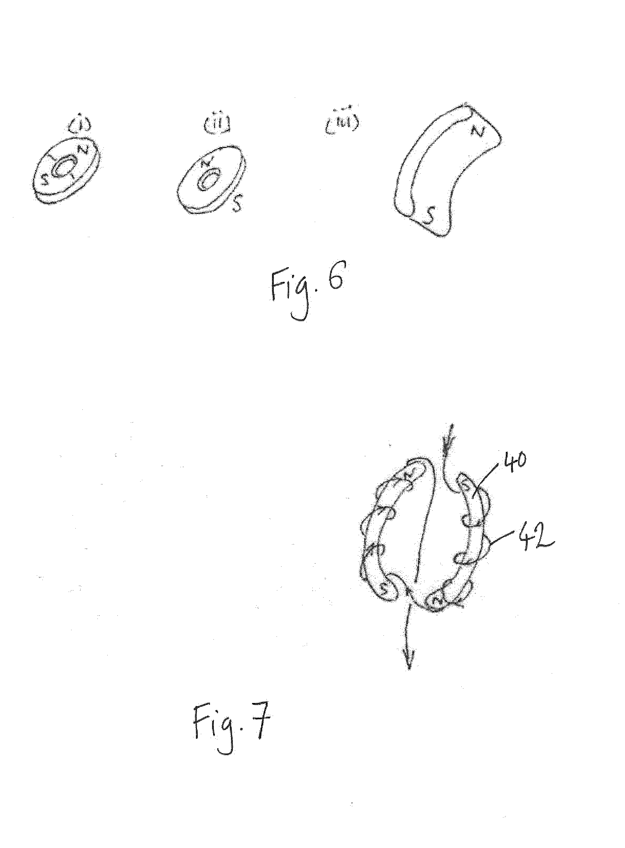

Figure 6 shows various permanent magnet structures (i), (ii) and (iii) suitable for incorporation in a reaction chamber in accordance with the present invention. Any of these magnet forms can be used in the present invention, or a combination or distribution of these forms may be used. Figure 6(i) shows a diametric magnet, figure 6(ii) shows an annular magnet as used in the chamber of figure 5, while figure 6(iii) shows a horseshoe magnet. It will be appreciated that the present invention is suitable for use with any shaped magnet, such as any custom shaped magnet.

Figure 7 shows one possible arrangement of a flow path around a pair of horseshoe magnets 40. In use, a capillary tube 42 may be fed through the magnetic fields and the rate of flow of the fluid may be adjusted either from gravity or by pumping. In an initial water treatment application the optimum flow rate was found to be similar to the rate of blood circulation within the human body.

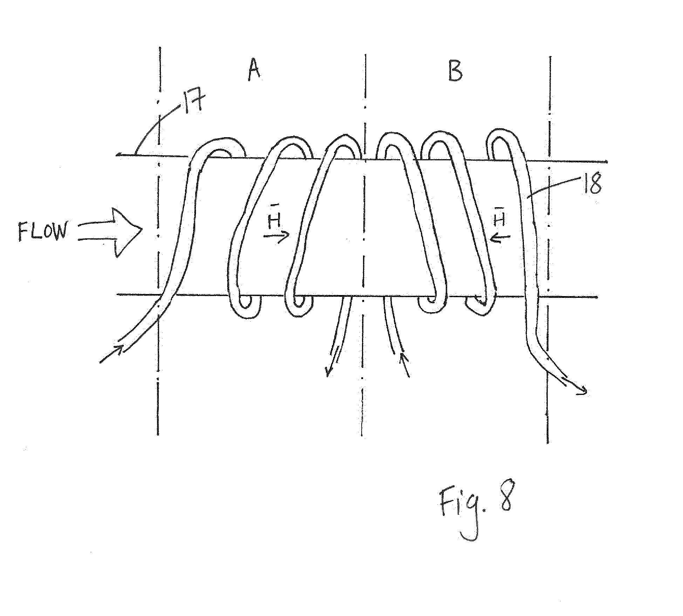

Figure 8 shows an alternative embodiment of a reaction chamber in accordance with the present invention. The chamber 17 incorporates a high magnetic field axial system in which coolant is used to maintain safe temperatures. A hollow winding 18 is used through which the coolant flows. An electrical current is applied to each winding 18 in the direction shown by the arrows. Two sections of the chamber are shown in figure 8, section A having opposite windings to section B. The fluid to be treated flows through the chamber in the direction shown by the large arrow and is subjected to the effects of the magnetic field created by the windings.

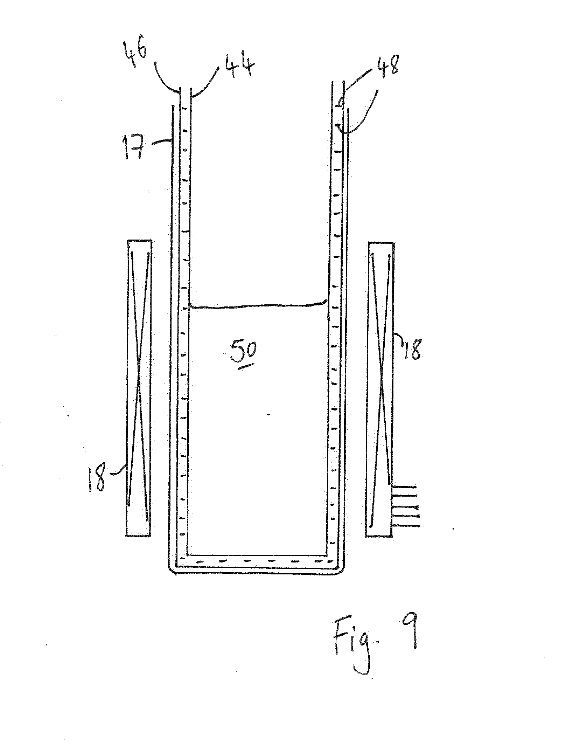

Figure 9 shows a reaction chamber in accordance with a further embodiment of the invention. This embodiment is suitable for use with food-grade reactants where there can be no direct interaction between the needles and the reactant. As shown, a double chamber is used comprising a reactant container 44 inside a reaction element container 46, both containers arranged inside the reactor wall 17. Electrical windings 18 are arranged outside the reactor wall. The needles 48 in the reaction element container 46 are isolated from the reactant 50 in the inner reactant container 44.

A novel and completely passive method of producing high strength, strongly time varying magnetic fields, with extreme field gradients has been designed and implemented. The structures have been used as a water treatment system, for the treatment/improvement of alcoholic based liquids where it modifies the water content of the spirit. The result is an enhancement of the quality and purity of the spirit. In addition the technique has been applied in the area of viticulture to implement a rapid ageing of the wine prior to bottling.

The words "comprises/comprising" and the words "having/including" when used herein with reference to the present invention are used to specify the presence of stated features, integers, steps or components but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A method of enhancing a chemical process comprising:
(a) providing a plurality of magneto-strictive agents in a reaction chamber having an external electromagnetic coil winding;
(b) introducing fluid reactants into the chamber; and
(c) applying a discontinuous time variable signal to the coil winding to generate a time varying magnetic field with high field gradients within the chamber to enhance the chemical processing of the fluid reactants.

2. The method of claim 1 wherein the discontinuous time variable signal applied to the coil winding is chopped.

3. The method of claim 1 or claim 2 wherein the discontinuous time variable signal applied to the coil winding is frequency variable.

4. The method of claim 1 wherein the chemical process is trans-esterification and the fluid reactants comprise methanol and oil; or wherein the chemical process is esterification.

5. A system for enhancing a chemical process comprising:
(a) at least one reaction chamber for fluid reactants, the at least one reaction chamber having an external electromagnetic coil winding;
(b) a plurality of magneto-strictive agents within the at least one reaction chamber;
(c) means for applying a discontinuous time variable signal to the coil winding to generate a time varying magnetic field with high field gradients within the chamber to enhance the chemical processing of fluid reactants contained therein.

6. The system of claim 5 comprising at least three reaction chambers in series, wherein at least one of the reaction chambers is connected in reverse, relative its adjacent reaction chambers.

7. The system of claim 5 or claim 6 wherein the magneto-strictive agents are needles.

8. The system of any of claims 5-7 further comprising a field enhancing mesh.

9. A system for enhancing fluid quality comprising:
a conduit for a fluid;
at least one permanent magnet arranged in the conduit;
a flow path defined within the conduit around the at least one permanent magnet,
the flow path being non-linear, and
means for pumping fluid through the conduit in a pulsed manner.

10. The system of claim 9 further comprising means for varying at least one of pump pressure, fluid flow velocity, or pulse rate.

11. The system of claim 9 or claim 10 wherein the at least one permanent magnet comprises a distribution of magnetic elements in the form of a cylindrical insert.

12. The system of any of claims 9 to 11 further comprising means for varying the field strength within the range of -1.3 Tesla to +1.3 Tesla.

13. The system of any of claims 9 to 12 wherein the flow path follows a labyrinth-type path.

14. A reaction core for use in a system for enhancing fluid quality, the reaction core comprising:
a conduit for a fluid;
at least one permanent magnet arranged in the conduit;
a flow path defined within the conduit around the at least one permanent magnet, the flow path being non-linear.

15. A method for enhancing fluid quality comprising:
arranging a non-linear flow path around at least one permanent magnet in a conduit; and
pumping fluid through the conduit in a pulsed manner.
